# EUROPÄISCHE PATENTANMELDUNG

(11) **EP 1 087 594 A2**
(43) Veröffentlichungstag der Anmeldung: **28.03.2001**
(21) Anmeldenummer: 00120056.7
(22) Anmeldetag: 15.09.2000
(51) Int. Cl.: H04M 3/42, H04M 3/54

(54) **Umzugsdienst im Telekomunikations(=TK)-Netz**

(30) Priorität: 24.09.1999 DE 19945825
(71) Anmelder: ALCATEL, 75088 Paris (FR)
(72) Erfinder: Weik, Hartmut, 70195 Stuttgart (DE); Krank, Lothar, 71254 Ditzingen (DE)
(74) Vertreter: KOHLER SCHMID + PARTNER

(57) **Zusammenfassung**

Ein Verfahren zur Unterstützung des Aufbaus einer Telekommunikations(=TK)-Verbindung zu einem TK-Teilnehmer (B) an einem TK-Netzwerk (3), der zumindest während einer bestimmten Zeitspanne unter seiner Rufnummer bzw. Netzadresse an zwei oder mehr Zugangspunkten (1, 2) zum TK-Netzwerk (3) erreichbar sein soll, umfaßt folgende Schritte :
ein temporärer Dienst (4) im TK-Netzwerk (3) wird aktiviert;
der Dienst (4) leitet, solange er aktiviert ist, einen für die Rufnummer bzw. Netzadresse des TK-Teilnehmers (B) eingehenden Anruf bzw. Verbindungswunsch parallel an die zwei oder mehr Zugangspunkte (1, 2) des TK-Teilnehmers (B) zum TK-Netzwerk (3) weiter.
Damit kann ein besonders komfortables Leistungsmerkmal, insbesondere als Serviceleistung bei einem Umzug des TK-Teilnehmers (B), durch den Netzwerk-Betreiber oder einen unabhängigen Diensteanbieter bereitgestellt werden.

## Beschreibung

Die Erfindung betrifft ein Verfahren zur Unterstützung des Aufbaus einer Telekommunikations(=TK)-Verbindung zu einem TK-Teilnehmer an einem TK-Netzwerk, der zumindest während einer bestimmten Zeitspanne unter seiner Rufnummer bzw. Netzadresse an zwei oder mehr Zugangspunkten zum TK-Netzwerk erreichbar sein soll.

Das Problem der gleichzeitigen Erreichbarkeit an mehreren Zugangspunkten stellt sich vor allem bei einem Umzug eines TK-Teilnehmers von einem Ort zu einem anderen. In der Regel ist es bei den heute üblichen Verfahren, beispielsweise im Bereich der Telefonie, schwierig einen Teilnehmer über ein bestimmtes Telefon-Netzwerk während der Umzugsphase anzurufen, da der umziehende TK-Teilnehmer in diesem Zeitraum prinzipiell an zwei verschiedenen Netzzugangspunkten erreicht werden könnte.

Im einfachsten Fall wird zu Beginn des Umzugs der alte Anschluß abgeschaltet und, möglicherweise mit einer größeren Zeitverzögerung, der neue Anschluß am Zielort des umziehenden TK-Teilnehmers angeschaltet.

Eine etwas komfortablere Verfahrensweise bei einem Umzug innerhalb eines Ortsnetzes, bei dem der TK-Teilnehmer auch am neuen Netzzugangspunkt seine alte Nummer behalten kann, besteht darin, daß ab einem bestimmten Zeitpunkt für die Rufnummer des umziehenden TK-Teilnehmers eingehende Anrufe automatisch vom alten Netzzugangspunkt auf den neuen Netzzugangspunkt des umziehenden TK-Teilnehmers umgeleitet werden.

Insbesondere bei Umzügen in Regionen außerhalb des ursprünglich zuständigen Ortsnetzes erhält der TK-Teilnehmer eine neue Telefonnummer, so daß er während der Umzugsphase bestenfalls über zwei Telefonnummern erreichbar ist, nämlich beim alten Netzzugangspunkt mit der alten Telefonnummer und beim neuen Netzzugangspunkt mit der neuen Telefonnummer, was für die anrufenden TK-Teilnehmer zu einer gewissen Verwirrung und Unbequemlichkeit führt.

Aufgabe der vorliegenden Erfindung ist es demgegenüber, mit möglichst einfachen Mitteln die Erreichbarkeit eines TK-Teilnehmers an mehreren Netzzugangspunkten, insbesondere während eines Umzuges, erheblich zu verbessern.

Erfindungsgemäß wird diese Aufgabe dadurch gelöst, daß ein temporärer Dienst im TK-Netzwerk aktiviert wird und dieser Dienst, solange er aktiviert ist, einen für die Rufnummer bzw. Netzadresse des TK-Teilnehmers eingehenden Anruf bzw. Verbindungswunsch parallel an die zwei oder mehr Zugangspunkte des TK-Teilnehmers zum TK-Netzwerk weiterleitet. Mit diesem sowohl für die TK-Netzbetreiber und für entsprechende unabhängige Diensteanbieter als auch für die TK-Teilnehmer attraktiven Dienst wird insbesondere im Falle eines Umzugs eines TK-Teilnehmers ein komfortables Leitstungsmerkmal bereitgestellt. Die Rufzustellung erfolgt über einen gewissen Zeitraum parallel an das alte und das neue Ziel bzw. an mehrere Netzzugangspunkte des TK-Teilnehmers. Das gleiche gilt bei Verbindungswünschen über andere TK-Medien, beispielsweise bei ankommenden E-Mails im Internet.

Bei einer bevorzugten Variante des erfindungsgemäßen Verfahrens wird der Dienst in derjenigen Ortsvermittlungsstelle vorgehalten, die für den Netzzugangspunkt zuständig ist, dem die Rufnummer bzw. Netzadresse des TK-Teilnehmers jeweils zugeordnet ist.

Alternativ kann der Dienst aber auch als Leistungsmerkmal eines IN (=Intelligent Network) Dienstes, insbesondere durch Herstellen einer Konferenzschaltung zu den Netzzugangspunkten bereitgestellt werden.

Wie bereits oben erwähnt, ist das erfindungsgemäße Verfahren dann von besonderem Vorteil, wenn der Dienst als Serviceleistung bei einem Umzug des TK-Teilnehmers zur Erleichterung seiner Erreichbarkeit angeboten wird.

Eine Weiterbildung dieser Verfahrensvariante zeichnet sich dadurch aus, daß der umziehende TK-Teilnehmer seine alte Rufnummer bzw. Netzadresse behält, insbesondere bei einem Umzug innerhalb eines Ortsnetzes, und daß der Dienst den ankommenden Ruf bzw. Verbindungswunsch gleichzeitig auf zwei Leitungen an den alten und an den neuen Netzzugangspunkt des TK-Teilnehmers weiterleitet. Dies ist besonders bequem für alle Beteiligten, weil einerseits die anrufenden TK-Teilnehmer die ihnen in der Regel bereits bekannte alte Rufnummer bzw. Netzadresse anwählen können und andererseits der umziehende TK-Teilnehmer während der Umzugsphase sowohl am Ursprungsort als auch am Zielort erreichbar ist.

Bei einer Weiterbildung wird der ankommende Ruf bzw. Verbindungswunsch auf einer der beiden Leitungen gelöscht, sobald er an einem Endgerät am anderen Netzzugangspunkt angenommen wird. Dadurch werden die betroffenen Leitungen nicht unnötig blockiert.

Vorteilhafterweise wird bei einer Weiterbildung der obigen Verfahrensvariante der Dienst automatisch deaktiviert, sobald der alte Netzzugangspunkt des umziehenden TK-Teilnehmers einer neuen Rufnummer bzw. Netzadresse zugeordnet wird. Ab diesem Zeitpunkt ist dann der Umzug definitiv abgeschlossen, ein neuer TK-Teilnehmer hat den alten Netzzugangspunkt übernommen und es besteht keine Notwendigkeit einer Weiterführung des erfindungsgemäßen Dienstes, da der umgezogene TK-Teilnehmer nunmehr über den neuen Netzzugangspunkt erreichbar sein wird.

Eine andere Weiterbildung der oben beschriebenen Verfahrensvariante zeichnet sich dadurch aus, daß der umziehende TK-Teilnehmer eine neue Rufnummer bzw. Netzadresse erhält, insbesondere bei einem Umzug außerhalb eines Ortsnetzes, und daß der Dienst den ankommenden Ruf bzw. Verbindungswunsch gleichzeitig an den der alten und an den der neuen Rufnummer bzw. Netzadresse des TK-Teilnehmers zugeordneten Netzzugangspunkt weiterleitet. Dadurch behält der umziehende TK-Teilnehmer die Möglichkeit, solange er sich noch am alten Netzzugangspunkt aufhält, eingehende Rufe bzw. Verbindungswünsche auch schon unter der neuen Rufnummer bzw. Netzadresse anzunehmen.

Eine weitere Verbesserung dieser Verfahrensvariante besteht darin, daß der ankommende Ruf bzw. Verbindungswunsch zu einem der beiden Netzzugangspunkte gelöscht wird, sobald er an einem Endgerät am jeweils anderen Netzzugangspunkt angenommen wird. Dadurch wird wiederum die bereitgestellte Netzkapazität nicht unnötig blockiert.

Besonders vorteilhaft ist auch eine Weiterbildung, bei der ein für die alte Rufnummer bzw. Netzadresse des umgezogenen TK-Teilnehmers ankommender Ruf bzw. Verbindungswunsch automatisch zu dem der neuen Rufnummer bzw. Netzadresse zugeordneten Netzzugangspunkt umgeleitet wird, sobald mindestens ein Anruf bzw. Verbindungswunsch an einem Endgerät am Netzzugangspunkt der neuen Rufnummer bzw. Netzadresse angenommen wurde. Durch die Annahme des Anrufes bzw. Verbindungswunsches an der neuen Adresse wird dem TK-Netzwerk und über dieses dem erfindungsgemäßen Dienst mitgeteilt, daß der TK-Teilnehmer nunmehr umgezogen ist.

Auch hier kann der erfindungsgemäße Dienst automatisch deaktiviert werden, sobald die alte Rufnummer bzw. Netzadresse des umziehenden TK-Teilnehmers einem neuen TK-Teilnehmer zugeordnet wird. Ab diesem Moment hat der umgezogene TK-Teilnehmer ohnehin keinen Zugriff mehr auf die alte Rufnummer bzw. Netzadresse.

Besonders sinnvoll ist auch eine Verfahrensvariante, bei der der Dienst automatisch deaktiviert wird, sobald ein Ruf bzw. eine Nachricht vom neuen Netzzugangspunkt oder unter der neuen Rufnummer bzw. Netzadresse des umziehenden TK-Teilnehmers abgeht. Durch die aktive Benutzung des neuen Netzzugangspunktes oder der neuen Rufnummer bzw. Netzadresse gibt der TK-Teilnehmer dem Netz bekannt, daß er nunmehr umgezogen ist und den Dienst nicht mehr benötigt.

Sinnvoll ist es, wenn der Dienst nach einer vorbestimmten Zeitdauer, beispielsweise nach einer oder zwei Wochen, automatisch deaktiviert wird. Dies gilt natürlich nicht in Fällen, in denen der TK-Teilnehmer generell auch in Zukunft bzw. auf längere Frist an mehreren Netzzugangspunkten gleichzeitig erreichbar sein will.

Vorteilhaft ist auch eine Verfahrensvariante, bei der der Dienst durch ein bestimmtes, insbesondere durch den TK-Teilnehmer ausgelöstes Triggersignal aktiviert und/oder deaktiviert wird. Dadurch kann der TK-Teilnehmer selbst bestimmen, wie lange er den Dienst in Anspruch nehmen möchte. Das Triggersignal kann beispielsweise durch Eingabe eines nur dem TK-Teilnehmer bekannten Codewortes ausgelöst werden.

In den Rahmen der vorliegenden Erfindung fällt auch eine Servereinheit zur Unterstützung der erfindungsgemäßen Verfahrens sowie ein Computerprogramm zur Durchführung des Verfahrens der oben beschriebenen Art.

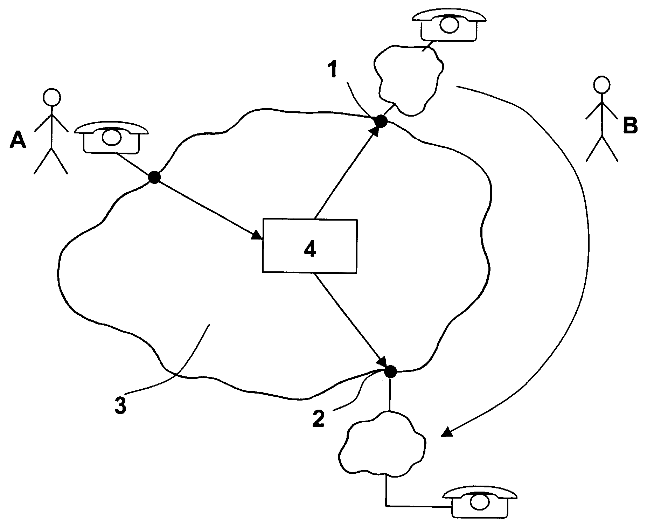

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt schematisch die Situation bei der Anwendung des erfindungsgemäßen Verfahrens während des Umzugs des betroffenen TK-Teilnehmers B.

Ein rufender TK-Teilnehmer A möchte über ein TK-Netzwerk 3 den gerufenen TK-Teilnehmer B erreichen, der gerade im Umzug begriffen ist, was durch den gebogenen Pfeil angedeutet wird. Der gerufene TK-Teilnehmer B war bisher unter einer bestimmten Rufnummer bzw. Netzadresse an einem Netzzugangspunkt 1 erreichbar und zieht gerade an einen anderen Ort, wo er unter dem Netzzugangspunkt 2, entweder unter der alten oder unter einer neuen Rufnummer bzw. Netzadresse erreichbar sein wird.

Während der Umzugsphase wird der vom TK-Teilnehmer A eingehende Anruf bzw. Verbindungswunsch über einen Dienst 4 parallel an den alten Netzzugangspunkt 1 sowie an den neuen Netzzugangspunkt 2 des gerufenen TK-Teilnehmers B weitergeleitet. Der Dienst 4 kann beispielsweise in der Ortsvermittlungsstelle vorgehalten werden, die für den alten Netzzugangspunkt 1 zuständig ist oder als Leistungsmerkmal eines IN (= Intelligent Network)-Dienstes bereitgestellt werden. Insbesondere kann die parallele Zustellung durch temporäre Herstellung einer Konferenzschaltung zu beiden Netzzugangspunkten 1, 2 bewirkt werden.

Während in der Zeichnung als Endgeräte für die TK-Verbindungen schematisch Telefone dargestellt sind, bezieht sich das erfindungsgemäße Verfahren auch auf andere TK-Endgeräte, insbesondere Telefaxgeräte sowie andere Kommunikationseinrichtungen, beispielsweise Personal-Computer, die an ein entsprechendes TK-Netz, wie etwa das Internet Zugang haben.

## Patentansprüche

1. Verfahren zur Unterstützung des Aufbaus einer Telekommunikations(=TK)-Verbindung zu einem TK-Teilnehmer (B) an einem TK-Netzwerk (3), der zumindest während einer bestimmten Zeitspanne unter seiner Rufnummer bzw. Netzadresse an zwei oder mehr Zugangspunkten (1,2) zum TK-Netzwerk (3) erreichbar sein soll, mit folgenden Schritten :
ein temporärer Dienst (4) im TK-Netzwerk (3) wird aktiviert,
der Dienst (4) leitet, solange er aktiviert ist, einen für die Rufnummer bzw. Netzadresse des TK-Teilnehmers (B) eingehenden Anruf bzw. Verbindungswunsch parallel an die zwei oder mehr Zugangspunkte (1,2) des TK-Teilnehmers (B) zum TK-Netzwerk (3) weiter.

2. Verfahren nach Anspruch 1, dadurch gekennzeichnet, daß der Dienst (4) in der Ortsvermittlungsstelle vorgehalten wird, die für den Netzzugangspunkt (1) zuständig ist, dem die Rufnummer bzw. Netzadresse des TK-Teilnehmers (B) jeweils zugeordnet ist.

3. Verfahren nach Anspruch 1, dadurch gekennzeichnet, daß der Dienst (4) als Leistungsmerkmal eines IN (= Intelligent Network)-Dienstes, insbesondere durch Herstellen einer Konferenzschaltung zu den Netzzugangspunkten (1,2) bereitgestellt wird.

4. Verfahren nach einem der vorhergehenden Ansprüche, dadurch gekennzeichnet, daß der Dienst (4) als Serviceleistung bei einem Umzug des TK-Teilnehmers (B) angeboten wird.

5. Verfahren nach Anspruch 4, dadurch gekennzeichnet, daß der umziehende TK-Teilnehmer (B) seine alte Rufnummer bzw. Netzadresse behält, insbesondere bei einem Umzug innerhalb eines Ortsnetzes, und daß der Dienst (4) den ankommenden Ruf bzw. Verbindungswunsch gleichzeitig auf zwei Leitungen an den alten und an den neuen Netzzugangspunkt (1 bzw. 2) des TK-Teilnehmers (B) weiterleitet.

6. Verfahren nach Anspruch 5, dadurch gekennzeichnet, daß der ankommende Ruf bzw. Verbindungswunsch auf einer der beiden Leitungen gelöscht wird, sobald er an einem Endgerät am anderen Netzzugangspunkt (1 oder 2) angenommen wird.

7. Verfahren nach einem der Ansprüche 4 bis 6, dadurch gekennzeichnet, daß der Dienst (4) automatisch deaktiviert wird, sobald der alte Netzzugangspunkt (1) des umziehenden TK-Teilnehmers (B) einer neuen Rufnummer bzw. Netzadresse zugeordnet wird.

8. Verfahren nach Anspruch 4, dadurch gekennzeichnet, daß der umziehende TK-Teilnehmer (B) eine neue Rufnummer bzw. Netzadresse erhält, insbesondere bei einem Umzug außerhalb eines Ortsnetzes, und daß der Dienst (4) den ankommenden Ruf bzw. Verbindungswunsch gleichzeitig an den der alten und an den der neuen Rufnummer bzw. Netzadresse des TK-Teilnehmers (B) zugeordneten Netzzugangspunkt (1 bzw. 2) weiterleitet.

9. Verfahren nach Anspruch 8, dadurch gekennzeichnet, daß der ankommende Ruf bzw. Verbindungswunsch zu einem der beiden Netzzugangspunkte (1 oder 2) gelöscht wird, sobald er an einem Endgerät am jeweils anderen Netzzugangspunkt (2 oder 1) angenommen wird.

10. Verfahren nach Anspruch 8 oder 9, dadurch gekennzeichnet, daß ein für die alte Rufnummer bzw. Netzadresse des umgezogenen TK-Teilnehmers (B) ankommender Ruf bzw. Verbindungswunsch automatisch zu dem der neuen Rufnummer bzw. Netzadresse zugeordneten Netzzugangspunkt (2) umgeleitet wird, sobald mindestens ein Anruf bzw. Verbindungswunsch an einem Endgerät am Netzzugangspunkt (2) der neuen Rufnummer bzw. Netzadresse angenommen wurde.

11. Verfahren nach einem der Ansprüche 4, oder 8 bis 10, dadurch gekennzeichnet, daß der Dienst (4) automatisch deaktiviert wird, sobald die alte Rufnummer bzw. Netzadresse des umziehenden TK-Teilnehmers (B) einem neuen TK-Teilnehmer zugeordnet wird.

12. Verfahren nach einem der Ansprüche 4 bis 11, dadurch gekennzeichnet, daß der Dienst (4) automatisch deaktiviert wird, sobald ein Ruf bzw. eine Nachricht vom neuen Netzzugangspunkt (2) oder unter der neuen Rufnummer bzw. Netzadresse des umziehenden TK-Teilnehmers (B) abgeht.

13. Verfahren nach einem der vorhergehenden Ansprüche, dadurch gekennzeichnet, daß der Dienst (4) nach einer vorbestimmten Zeitdauer, beispielsweise nach einer oder zwei Wochen, automatisch deaktiviert wird.

14. Verfahren nach einem der vorhergehenden Ansprüche, dadurch gekennzeichnet, daß der Dienst (4) durch ein bestimmtes, insbesondere durch den TK-Teilnehmer (B) ausgelöstes Triggersignal aktiviert und/oder deaktiviert wird.

15. Servereinheit zur Unterstützung des Verfahrens nach einem der Ansprüche 1 bis 14.

16. Computerprogramm zur Durchführung des Verfahrens nach einem der Ansprüche 1 bis 14.
